# EUROPEAN PATENT APPLICATION

(11) **EP 3 951 471 A1**
(43) Date of publication of application: **09.02.2022**
(21) Application number: 21755346.0
(22) Date of filing: 07.01.2021
(51) Int. Cl.: G02B 21/10

(54) **DARK FIELD ILLUMINATOR FOR MICROSCOPY IMAGING**

(30) Priority: 27.03.2020 CN 202010232042; 27.03.2020 CN 202020419817 U; 23.09.2020 CN 202011008475; 23.09.2020 CN 202022112793 U
(71) Applicant: Convergence Technology Co. Ltd., Wuhan, Hubei 430074 (CN)
(72) Inventor: HU, Qinglei, Wuhan, Hubei 430074 (CN); HUANG, Kai, Wuhan, Hubei 430074 (CN); LI, Ning, Wuhan, Hubei 430074 (CN); LI, Mengting, Wuhan, Hubei 430074 (CN); DING, Changjie, Wuhan, Hubei 430074 (CN)
(74) Representative: Petculescu, Ana-Maria
(86) International application number: PCT/CN2021/070723
(87) International publication number: WO 2021/190079

(57) **Abstract**

The present invention discloses a dark field illuminator for microscopic imaging, characterized in that, the dark field illuminator is arranged above an adjustable lens group of a unit microscopic imaging module and corresponds to the adjustable lens group, a surface of the dark field illuminator is attached to a back of a sample slide, and the sample slide is located between the dark field illuminator and the adjustable lens group; the dark field illuminator includes a bright and dark field substrate 4017 and a dark field black background patch 4018, the size of the dark field black background patch matches with that of the adjustable lens group, and the dark field black background patch is arranged close to or away from the adjustable lens group relatively to the bright and dark field substrate. Preferably, the bright and dark field substrate further has a recessed structure with a white diffuse reflection surface. The dark field illumine does not have a light source itself, which reduces a volume, and preferably, the dark field illuminator for microscopic imaging also has a bright field illumination structure and function, which can also be used as dark/bright field illumination alone, and can also be used for switching, so that the quick switching between bright and dark fields realizes integration and miniaturization of dark field illuminators and bright field illuminators.

## Description

### TECHNICAL FIELD

The present invention belongs to the technical field of optical microscopic imaging, and specifically relates to a dark field illuminator for microscopic imaging, and a microscopic imaging system including the dark field illuminator for microscopic imaging.

### BACKGROUND

With the development of optical imaging technology, the application fields of optical imaging modules are becoming more and more extensive, and there are more and more products in the field of ultra-macro imaging and microscopic imaging. With the development of using the artificial intelligence technology in the image processing field and the mass production of high-performance image processing hardware, microscopic imaging technology is developing in the direction of large field of view, high resolution, high throughput and the like. For example, for the wafer inspection technology in the field of industrial inspection, and the screening technology for cervix uteri in the field of cancer screening, it is usually necessary to perform sub-micron level resolution imaging on centimeter level samples. At the same time, with the development of mobile Internet technology, portable intelligent mobile terminals have become popular, and the integration of conventional large-volume desktop testing instruments into portable terminals will be an important development direction in the future.

The conventional single microscopic objective imaging solution is limited by the manufacturing process and the size of the image sensor, which cannot acquire micron level image resolution within a centimeter level imaging field of view. The current method for microscopic imaging of large-area samples is to move an optical system or observation samples on the basis of conventional microscopes. For example, a Chinese invention patent with an application number CN201180009191.2 discloses a solution of adding an electromechanical system such as a guide rail or a crank arm to move the optical system. A Chinese utility model patent with an application number CN201420420879.0 and a Chinese invention patent with an application number CN201610746297.5 disclose a method of adding an electromechanical device or a manual device to move a placing platform of observed samples. Both of the above methods can acquire micron level resolution images of centimeter level samples. However, the conventional microscopic imaging solution based on a single objective can only acquire images with a large field of view in a serial manner, and is limited by conventional micro-optical imaging devices. The complexity of the overall system is high, the stability is low and the price is expensive.

The method of increasing the overall observation area by constituting an array by multiple objective lenses to observe different areas of a sample can also improve the efficiency of sample inspection. The array solution can use parallel imaging modes to achieve imaging with a large field of view and a high resolution, but the conventional microscopic objective has a large volume, and the array mode causes a complex imaging structure, a bulky volume, and a high cost. A Chinese invention patent with an application number CN201910585599.2 discloses a new type of objective array applied to multi-field parallel imaging, of which function realization mainly depends on a small microscopic objective unit with a large field of view and a high performance mentioned in the public document. A Chinese invention patent with an application number CN201910743158.0 discloses an array type microscopic image acquisition system with a transmission illumination light source. A Chinese invention patent with an application number CN201910743162.7 discloses an array type microscopic image acquisition system with a reflection illumination light source. This type of imaging solution achieves a small-volume, low-cost array solution by changing the structure of the conventional microscopic objective. However, for optical imaging systems, the accuracy of focusing is the key to ensure imaging quality. Generally, the depth of field of a high-resolution microscopy imaging system is within tens of micrometers. As for guaranteeing the flatness of tens of micrometers within the centimeter-level field range of view, there is an extremely demanding for all of the design, processing, assembly, operation, and stability of the imaging system. Moreover, for some samples with large fluctuations, such as stacked cell samples, the sample itself has unevenness, thus even if the array type imaging system has reached parfocal design, it cannot complete a clear imaging for the type of samples in a single imaging process. It can be seen that due to a larger size of body of the conventional microscopic eyepiece relative to the sample, and no adjustable focusing microscope product or combination method suitable for this situation, in solutions of the prior art, this type of focusing problems has not been well solved.

In addition, as a conventional solution with an application number CN201790000885.2, both a dark field illuminator and a bright field illuminator have their own light sources, and the bright and dark fields are separated independently, resulting in a complex imaging structure, a large volume, and an inconvenient switching between bright and dark fields, which is difficult to use in the field of portable microscopy imaging.

### SUMMARY

In view of at least one of the above defects or improvement requirements of the prior art, the present invention provides a dark field illuminator for microscopic imaging, in which the dark field illuminator does not have a light source itself, but uses a light source of a unit microscopic imaging module, which reduces a volume. Moreover, the dark field illuminator can be used as dark field illumination alone, and has a bright field illumination structure and a bright field transmission illumination function, which also can be used as bright field illumination alone, and can also be used to switch between dark field illumination and bright field illumination. The switching between bright and dark fields is quick and convenient, which realizes integration and miniaturization of dark field illuminators and bright field illuminators.

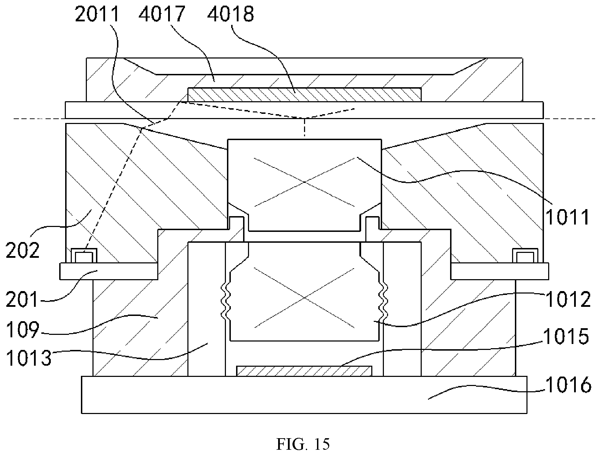

In order to achieve the above object, according to one aspect of the present invention, a dark field illuminator for microscopic imaging is provided (in the part of DESCRIPTION OF THE PREFERRED EMBODIMENTS, particularly in Embodiments 7-8 and FIGS. 15-16, specifically a second dark field illuminator), the dark field illuminator is arranged above an adjustable lens group of a unit microscopic imaging module and corresponds to the adjustable lens group, a surface of the dark field illuminator is attached to a back of a sample slide, and the sample slide is located between the dark field illuminator and the adjustable lens group;

the dark field illuminator includes a bright and dark field substrate and a dark field black background patch, the size of the dark field black background patch matches with that of the adjustable lens group, and the dark field black background patch is arranged close to or away from the adjustable lens group relatively to the bright and dark field substrate.

Optionally, in the case of dark field illumination, a surface of the entire dark field black background patch is attached to a back of the sample slide.

Optionally, the dark field illuminator is a reflective dark field illuminator, which is a white diffuse reflection plate with the dark field black background patch.

Optionally, the dark field black background patch is surrounded by the white diffuse reflection plate.

Optionally, the dark field black background patch is circular.

Optionally, a size of the dark field black background patch is larger than that of a field of view of the unit microscopic imaging module.

Optionally, a center of the dark field black background patch, a center of the sample, and an optical axis of the unit microscopic imaging module are located on a same axis.

Optionally, the bright and dark field substrate of the dark field illuminator also has a recessed structure, and a white diffuse reflection surface is provided in the recessed structure, so that the dark field illuminator also has a bright field illumination function.

Optionally, in a case of bright field illumination, a surface of the bright and dark field substrate on a side of the recessed structure is attached to a back of the sample slide, and an opening of the recessed structure faces the unit microscopic imaging module.

Optionally, the dark field black background patch and the recessed structure are respectively arranged on the front and back surfaces of the bright and dark field substrate.

In order to achieve the above object, according to another aspect of the present invention, a microscopic imaging system is further provided, characterized by comprising an above-mentioned dark field illuminator for microscopic imaging and a unit microscopic imaging module.

In order to achieve the above object, according to another aspect of the present invention, a microscopic imaging system is further provided, characterized by comprising:

a plurality of unit microscopic imaging modules arranged according to a preset rule, and a data acquisition card connected with the plurality of unit microscopic imaging modules;

wherein, each of the unit microscopic imaging modules respectively includes an adjustable lens group that can independently adjust focus, and a photosensitive module corresponding to the adjustable lens group;

the data acquisition card is provided with a plurality of image processing modules respectively in an one-to-one relationship with the plurality of unit microscopic imaging modules; each of the image processing modules independently controls the corresponding adjustable lens group to focus, and acquires data corresponding to the photosensitive module.

Optionally, the microscopic imaging system further includes a fixing mechanism provided on the data acquisition card, and each of the adjustable lens groups is independently fixed to the data acquisition card by the fixing mechanism.

Optionally, the adjustable lens group includes a second lens group arranged close to the photosensitive module and a first lens group arranged away from the photosensitive module;

each of the unit microscopic imaging modules includes a focusing motor, the focusing motor is connected with any one lens group of the first lens group and the second lens group, and can adjust a relative position of the first lens group and the second lens group, so as to realize the focusing of the adjustable lens group.

Optionally,
the focusing motor is packaged together with any lens group connected with the focusing motor into an integrated package module.

Optionally, the other lens group of the first lens group and the second lens group is fixedly connected with the fixing mechanism; or
the fixing mechanism includes a lens group fixing seat, and the other lens group of the first lens group and the second lens group is in a threaded connection with the lens group fixing seat.

Optionally, a microscopic imaging system of the present invention further comprises an illumination module corresponding to the plurality of unit microscopic imaging modules, and the illumination module includes:
a first illumination light source arranged above the unit microscopic imaging module; or
a second illumination light source uniformly arranged around each of the unit microscopic imaging modules, and a light guide structure fixed above the second illumination light source.

Optionally,
the first illumination light source includes a fluorescence excitation light source, and the unit microscopic imaging module further includes a fluorescence excitation filter arranged on a lower end surface, inside or an upper end surface of the adjustable lens group; or
the first illumination light source includes a first dark field illuminator which is arranged above the adjustable lens group and corresponds to the adjustable lens group;
the second illumination light source further includes a second dark field illuminator which is arranged above the adjustable lens group and corresponds to the adjustable lens group.

Optionally,
the first dark field illuminator includes LED light sources in an array arrangement and in a housing with a first circular through-hole or a white backlight light source in a housing with a second circular through-hole, the first circular through-hole and the second circular through-hole are arranged opposite to the adjustable lens group;
the second dark field illuminator includes a bright and dark field substrate and a dark field black background patch, the size of the dark field black background patch matches with that of the adjustable lens group, and the dark field black background patch is arranged close to or away from the adjustable lens group relatively to the bright and dark field substrate.

Optionally, the white light backlight source includes:
backlight sources with holes, arranged on both sides above the adjustable lens group, wherein an opening direction of the backlight source with a hole is parallel to an upper surface of the adjustable lens group; and/or
a semi-transparent sheet with a black diffuse reflection surface, arranged directly above the adjustable lens group; and/or
a complete backlight source, arranged on a side of the semi-transparent sheet with a black diffuse reflection surface away from the adjustable lens group.

Optionally,
the image processing module includes an image signal processing unit, a data buffer unit, a motor control unit and a data transmission interface;
the image signal processing unit and the motor control unit are correspondingly connected with the photosensitive module and the focusing motor through flat cables;
the microscopic imaging system further comprises a main controller and an image display unit, the main controller is connected with the image processing unit via the data buffer unit, and the main controller is connected with the image signal processing unit via a first bus, and is connected with the image display unit through a second bus.

Optionally,
the main controller and the image display unit are integrated in an intelligent terminal.

The above-mentioned preferred technical features can be combined with each other as long as they do not conflict with each other.

Generally speaking, as compared with the prior art, the above technical solutions conceived by the present invention have the following beneficial effects:
1. the dark field illuminator for microscopic imaging of the present invention does not have a light source itself, but uses the light source of the unit microscopic imaging module, which reduces a volume. Moreover, the dark field illuminator can be used as dark field illumination alone, and also has a bright field illumination structure and a bright field transmission lighting function, which can also be used as bright field illumination alone, and can also be used to switch between dark field illumination and bright field illumination. The switching between bright and dark fields is quick and convenient, which realizes integration and miniaturization of dark field illuminators and bright field illuminators.
2. an independent adjustable focusing design of the microscopic imaging system according to the present invention reduces a consistency requirement of unit module assembly and improves the production efficiency of the products.

### BRIEF DESCRIPTION OF THE DRAWINGS

FIG. 1 is a schematic structure diagram of a first embodiment of a microscopic imaging system of the present invention.
FIG. 2 is a schematic structure diagram of a first embodiment of a unit microscopic imaging module in FIG. 1.
FIG. 3 is a schematic structure diagram of a second embodiment of a unit microscopic imaging module in FIG. 1.
FIG. 4 is a schematic structure diagram of a third embodiment of a unit microscopic imaging module in FIG. 1.
FIG. 5 is a schematic structure diagram of a second embodiment of a microscopic imaging system of the present invention.
FIG. 6 is a schematic structure diagram of a third embodiment of a microscopic imaging system of the present invention.
FIG. 7 is a schematic section structure diagram of the first embodiment of the unit microscopic imaging module in FIG. 5 or FIG. 6.
FIG. 8 is a schematic section structure diagram of the second embodiment of the unit microscopic imaging module in FIG. 5 or FIG. 6.
FIG. 9 is a schematic section structure diagram of the third embodiment of the unit microscopic imaging module in FIG. 5 or FIG. 6.
FIG. 10 is a schematic section structure diagram of a fourth embodiment of a microscopic imaging system of the present invention.
FIG. 11 is a schematic section structure diagram of a fifth embodiment of a microscopic imaging system of the present invention.
FIG. 12 is a schematic structure diagram of a sixth embodiment of a microscopic imaging system of the present invention.
FIG. 13 is a schematic section structure diagram of an embodiment of a microscopic imaging system of FIG. 12.
FIG. 14 is a schematic section structure diagram of another embodiment of a microscopic imaging system of FIG. 12.
FIG. 15 is a schematic section structure diagram (including a dark field illuminator for microscopic imaging of the present invention) of a seventh embodiment of a microscopic imaging system of the present invention.
FIG. 16 is a schematic section structure diagram (including a dark field illuminator for microscopic imaging of the present invention) of an eighth embodiment of a microscopic imaging system of the present invention.

### DESCRIPTION OF THE PREFERRED EMBODIMENTS

In order to make the objects, technical solutions, and advantages of the present invention clearer, the present invention will be further described in detail with reference to the accompanying drawings and embodiments hereinafter. It should be understood that the specific embodiments described herein are only used to explain the present invention, but not used to limit the present invention. In addition, the technical features involved in the various embodiments of the present invention described hereinafter can be combined with each other as long as they do not conflict with each other. Hereinafter, the present invention will be further described in detail in conjunction with specific embodiments.

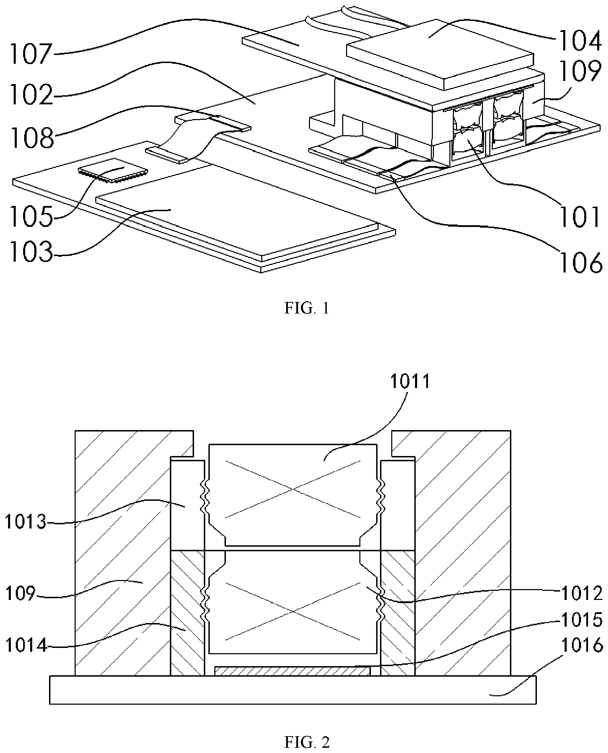

As shown in FIG. 1, in an embodiment of a microscopic imaging system of the present invention, it includes: a plurality of unit microscopic imaging modules 101 arranged according to a preset rule, and a data acquisition card 102 connected with the plurality of unit microscopic imaging modules 101. Thereinto, each of the unit microscopic imaging modules 101 respectively includes an adjustable lens group capable of independently adjusting focus, and a photosensitive module corresponding to the adjustable lens group. The data acquisition card 102 is provided with a plurality of image processing modules respectively in an one-to-one relationship with the plurality of unit microscopic imaging modules 101. Each of the image processing modules independently controls the corresponding adjustable lens group to focus, and acquires data corresponding to the photosensitive module. In this embodiment, the plurality of multiple unit microscopic imaging modules 101 can be arranged in a preset manner, for example, in an array arrangement. In the case of the array arrangement, a distance between each unit display imaging module can be set reasonably. In order to reduce a volume of the entire system as much as possible and ensure accurate imaging of the object to be tested, the distance between the plurality of unit microscopic imaging modules 101 needs to be set as small as possible, which is usually set to a smallest physical distance on a physical structure. Each of the unit microscopic imaging module 101 respectively includes an adjustable lens group and a photosensitive module corresponding to the adjustable lens group. The adjustable lens group of each unit microscopic imaging module 101 can independently adjust focusing. The data acquisition card 102 is provided with image processing modules, the image processing modules are respectively in an one-to-one relationship with the plurality of unit microscopic imaging modules, and is configured to control the independent focusing of the adjustable lens groups of the plurality of unit microscopic imaging modules 101 and acquire data corresponding to the photosensitive module at the same time. The image processing module constructs a large centimeter level field of view through the plurality of unit microscopic imaging modules 101, and realizes a free adjustment of a focal plane of a region corresponding to each unit microscopic imaging module 101, and each focal plane is in a non-parfocal discrete state, which can reduce the requirement for the physically assembling of the image processing module to ensure the flatness of the plurality of unit microscopic imaging modules 101 during the assembly process of the plurality of unit microscopic imaging modules 101, reduce the pressure in the production and assembly process, and improve the assembly efficiency. At the same time, through an independent adjustable focusing design of the unit microscopic imaging module 101, it can be used for imaging uneven samples with a high quality, and ensure that the focal planes in the field of view are in the best state during a single imaging process.

Optionally, the microscopic imaging system of the present invention further includes a fixing mechanism 109 provided on the data acquisition card 102, and each of the adjustable lens groups is independently fixed to the data acquisition card 102 by the fixing mechanism 109. Specifically, the fixing mechanism 109 is provided on the data acquisition card 102, and the adjustable lens groups are fixed by the fixing mechanism 109. Each adjustable lens group can be independently fixed by the fixing mechanism 109 without affecting each other.

As shown in FIGS. 2 to 4, optionally, the adjustable lens group includes a second lens group 1012 arranged close to the photosensitive module and a first lens group 1011 arranged away from the photosensitive module. Each of the unit microscopic imaging modules 101 includes a focusing motor 1013, the focusing motor 1013 is connected with any one lens group of the first lens group 1011 and the second lens group 1012, and can adjust a relative position of the first lens group 1011 and the second lens group 1012, so as to realize the focusing of the adjustable lens group. In this embodiment, the adjustable lens group includes the first lens group 1011 and the second lens group 1012. Thereinto, the second lens group 1012 is arranged close to the photosensitive module, and the first lens group is arranged away from the photosensitive module. A focusing motor 1013 corresponding to the adjustable lens group is arranged in the each of the unit microscopic imaging modules 101, and the relative position of the first lens group 1011 and the second lens group 1012 is adjusted through the focusing motor 1013 to realize the focusing of the adjustable lens group. The photosensitive module includes a circuit board 1016 fixed on the data acquisition card and a photosensitive chip 1015 arranged on the circuit board 1016. The circuit board 1016 includes but is not limited to a printed circuit board, a flexible circuit board, and the like. The photosensitive chip 1015 is fixedly placed at the image-side focal plane of the second lens group 1012, the light that converges through the second lens group 1012 is incident on the photosensitive chip 1015, and the photosensitive chip 1015 performs photoelectric conversion on the sensed light. The photosensitive chip 1015 is an area-array photoelectric device. For example, the photosensitive chip 1015 is a CMOS image sensor or a CCD image sensor. The first lens group 1011 and the second lens group 1012 constitute an approximate infinity-corrected microscope structure, and the first lens group 1011 and the second lens group 1012 both have positive refractive powers. The first lens group 1011 corresponds to an objective lens of a microscope, and the second lens group 1012 corresponds to a tube lens of the microscope. The focusing motor 1013 drives one group of the first lens group 1011 and the second lens group 1012 to achieve focusing adjustment, that is, to change the object plane or image plane position of the imaging module. The object plane closest to the imaging module is called a near-focus object plane, and the object plane farthest from the imaging module is called a far-focus object plane. And the direction away from this module is defined as a positive direction. There is a limit surface on the object side of the adjustable lens group. When there is a protective glass on the object side of the adjustable lens group, the object-side surface of the protective glass is the limit surface. When there is no protective glass on the object side of the lens group, the housing of the imaging module or the object-side end surface of other mechanical structure that cooperates with the imaging module is the limit surface. The near-focus object plane is within ±50µm from the limit plane, and the distance between the far-focus object plane and the limit plane is ≥220µm. The stroke of the focusing motor 1013 is ≥ 300µm and ≤ 600µm. In the focusing range, the minimum distance between the first lens group 1011 and the second lens group 1012 (the minimum distance between the surfaces of the optical lenses, not the distance between the mechanical housings of the lens groups) is ≥50µm, and when there is a protective glass, the minimum distance between the first lens group and the protective glass is ≥30µm. Using the above parameters has four beneficial effects: 1) a near-focus object plane can cover a short-distance area of the protective glass, which can image close objects, and a far-focus object plane can surpass a cover glass commonly used in microscopes, which satisfies a requirement for biomedical imaging, and can also avoid the tolerance of the limit surface caused by the thickness tolerance of the protective glass, 2) a motor stroke can effectively cover the dimensional tolerances of the components in the module due to processing and installation, which improves the manufacturability of mass production, 3) the minimum gaps between the first lens group 1011 and the protective glass, and between the first lens group 1011 and the second lens group 1012 are reserved, which improves the reliability of the module and avoids damage due to the colliding with each other of components in the module when the motor exceeds a rated stroke, 4) while achieving the above two beneficial effects, the miniaturization of the module is realized. The focusing motor 1013 of each unit microscopic imaging module 101 can be individually controlled and a single microscopic image can be read, thereby ensuring that the imaging focal plane of the entire array system is in a non-parfocal discrete state.

Optionally, the focusing motor 1013 is packaged together with any lens group connected with the focusing motor 1013 into an independent packaged module. The focusing motor 1013 can be packaged together with the first lens group 1011 or the second lens group 1012 connected with the focusing motor 1013 to form an independent packaged module. The independently packaged module can be fixed to the data acquisition card 102 directly or through the fixing mechanism 109. The independent packaged module can also be fixed to the fixing mechanism 109 in a snap-fit manner, so as to realize independent maintenance and replacement of the packaged module.

Optionally, the other lens group of the first lens group 1011 and the second lens group 1012 is fixedly connected with the fixing mechanism 109, and specifically, the other lens group which is not connected with the focusing motor 1013 can be fixedly connected with the fixing mechanism 109, for example, the package of the lens group is directly integrated with the fixing mechanism 109.

Optionally, the fixing mechanism 109 includes a lens group fixing seat 1014, and the other lens group of the first lens group 1011 and the second lens group 1012 is in a threaded connection with the lens group fixing seat 1014. Specifically, the fixing mechanism 109 may also be provided with a lens group fixing seat 1014, the lens group fixing seat 1014 is provided with threads, and the other lens group which is not connected with the focusing motor 1013 may be provided with corresponding threads to realize the threaded connection with the fixing mechanism 109 arranged on the lens group fixing seat 1014.

Optionally, as shown in FIGS. 1, 5, 6 and 12, the microscopic imaging system of the present invention further includes an illumination module arranged corresponding to the plurality of unit microscopic imaging modules 101. In one embodiment, the illumination module includes a first illumination light source 104 arranged above the unit microscopic imaging module 101, that is, transmission imaging can be realized by the first illumination light source 104 arranged above the unit microscopic imaging module 101. In another embodiment, the illumination module includes a second illumination light source uniformly arranged around each of the unit microscopic imaging modules 101, and by reasonably setting the positions of the light guide structure 202 and the second illumination light source, reflective imaging or transmission imaging can be realized.

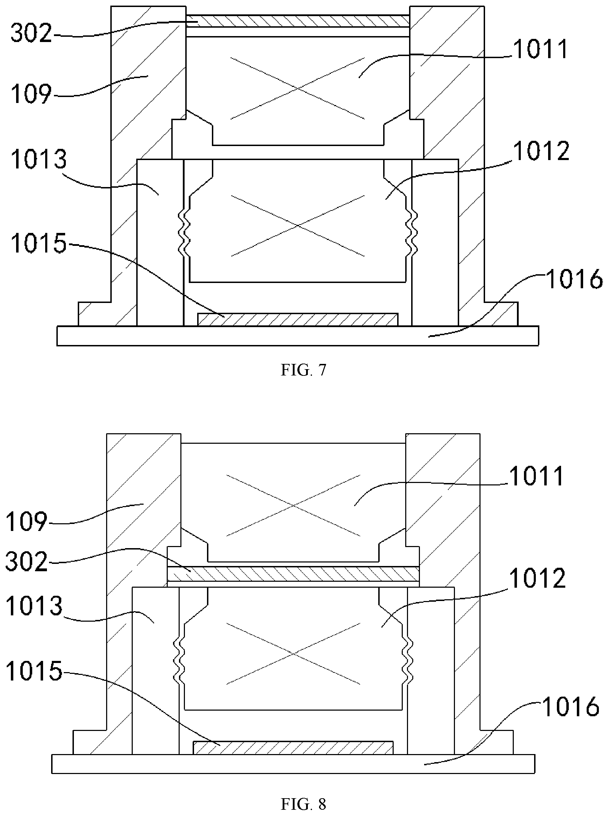

Optionally, the first illumination light source includes a fluorescence excitation light source, and the unit microscopic imaging module further includes a fluorescence excitation filter 302 arranged on the lower end surface, inside or upper end surface of the adjustable lens group. As shown in FIGS. 7 to 9, when the fluorescence excitation light source is used, the corresponding fluorescence excitation filter 302 is also arranged in the unit microscopic imaging module 101. The arrangement position of the fluorescence excitation filter 302 can be set on the lower end surface, inside or on the upper surface of the adjustable lens group. The fluorescence excitation light source is an oblique incidence laser 1041in a specific wavelength band or LED lamp beads 1042, which is fixed in the microscopic imaging system through a mechanical structure. The light source illuminates the fluorescence inspection sample in manners of transmission, oblique incidence, side incidence, etc., to excite the fluorescence of the sample. A fluorescence excitation filter 302 for fluorescence inspection is added to the unit microscopic imaging module 101, the excited fluorescence of the sample passes through the fluorescence excitation filter 302, and the photosensitive module collects a fluorescence detection image of the sample. When the oblique incidence laser 1041 is used as the light source, a laser emitter can be used to provide transmission light source for all the unit microscopic imaging modules 101. The arrangement position of the oblique incidence laser 1041 can ensure that it can cover all the unit microscopic imaging modules 101 as much as possible. In some embodiments, since the number of unit microscopic imaging modules 101 is relatively large, and the area after arrangement is relatively large, the number of oblique incidence lasers 1041 can be set to multiple, which are injected from different angles, so as to ensure that an imaging light source of the microscopic imaging module 101 meets the requirements.

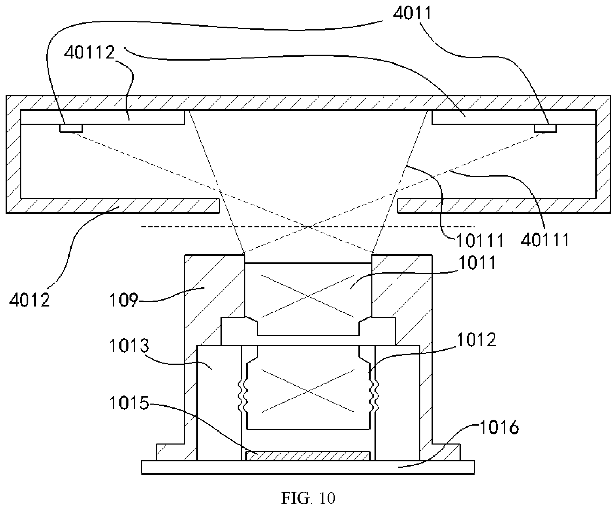

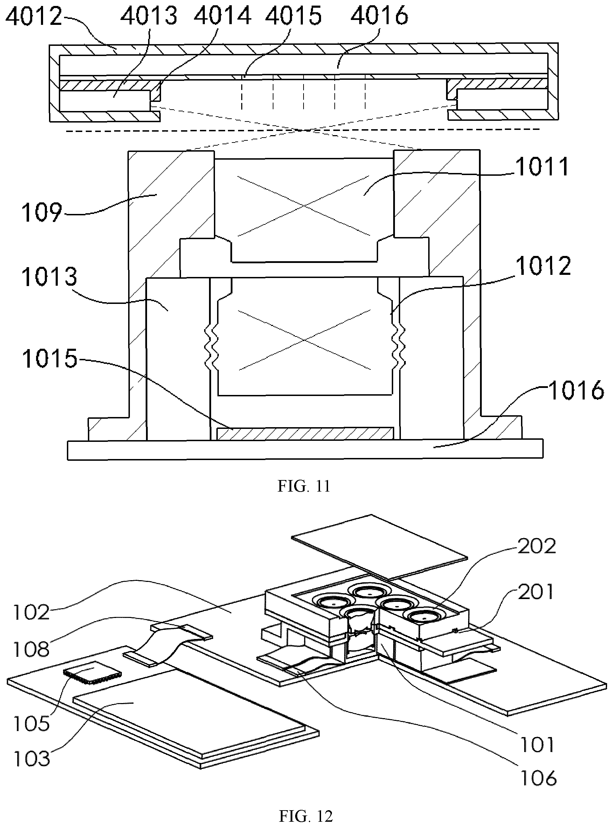

Optionally, as shown in FIGS. 10 and 11, the first illumination light source includes a first dark field illuminator which is arranged above the adjustable lens group and corresponds to the adjustable lens group. When the first dark field illuminator is used, the first dark field illuminator includes LED light sources 4011 in an array arrangement and in a housing with a first circular through-hole or a white backlight light source 4013 in the housing with a second circular through-hole, the first circular through-hole and the second circular through-hole are arranged opposite to the adjustable lens group, that is, the specific structure of the diffuse reflection illuminator adopting transmission illumination can be an LED light source 4011 in a matt black housing with a circular hole or a white light backlight source 4013 with a circular hole. The circular holes of the housing are arranged corresponding to the unit microscopic imaging module 101, an optical axis of the adjustable lens group of each unit microscopic imaging module 101 passes through a center of each circular hole of the housing, and the size of each circular hole is larger than the field range 10111 of view of each unit microscopic imaging module 101. The LED light sources 4011 are arranged in an array arrangement around the circular holes of the housing on a plane which is inside the housing 4012 and at a certain distance from the surface with the hole, and a range of the distance of the array arrangement is subject to that most of an exiting light 40111 obliquely irradiates the sample at a large angle and does not directly enter each adjustable lens group. The surface of a PCB substrate 40112 where the LED light sources 4011 and the modules form a circuit connection should be matt black, or a circular through-hole shall be arranged within a range where a field cone angle 10111 of each adjustable lens group passes through the circular hole of the housing and then fall the circuit board, so as to expose the matt black surface of the housing 4012. If the backlight source 4013 with a circular hole is used for illumination, the backlight source board is arranged on a plane that is arranged in the housing and within a certain distance from the surface of the housing with a circular hole, and is shielded by a stray light shielding baffle 4014, so that a light emitted from an effective light-emitting plane by the backlight source 4013 points to a direction of an observation sample and the lens of the module. The circular through-hole on the backlight 4013 is arranged corresponding to the module array, and is coaxial with the circular hole on the surface of the housing. The matt black surface of the housing is exposed in the lens field of view through the circular through-hole of the backlight source. The edge of each hole falls outside a range of the surface of the backlight source after the cone angle of lens passes through the circular hole of the housing. When a complete backlight source 4016 is added to the back of the backlight source 4013 with a circular hole, the light intensity of the backlight source 4013 with a circular hole is relatively strong, and the effective light-emitting plane of the complete backlight source 4016 covers a semi-transparent black diffuse reflection sheet 4015 and faces the direction of the sample and the lens. The emitting light of the complete backlight source 4016 exposed to some areas of the light-emitting plane which is behind a circular hole of the backlight source with the circular through-hole can transmit and illuminate the sample through the semi-transparent black diffuse reflection sheet 4015, and accordingly, this dark field illuminator at this time also has a function of bright field transmission illumination, which realizes the integration and miniaturization of the dark field illuminator and the bright field illuminator. The above-mentioned illumination light source forms a circuit connection with each unit microscopic imaging module 101 through a wire or the like.

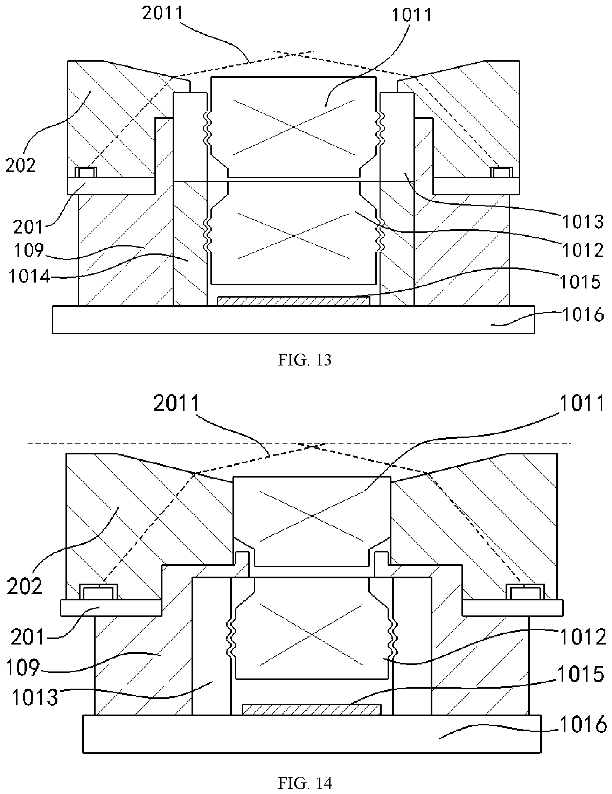

Optionally, as shown in FIGS. 13 to 16, the second illumination light source is provided on the upper end surface of the fixing mechanism 109. The second illumination light source may be LED lamp beads 201 arranged in an array around the unit microscopic imaging module 101, and the emitted light propagates through a light guide structure 202 made of transparent or semi-transparent material. An object-side end surface of the light guide structure 202 is provided with a positioning surface for limiting the position of the sample, so that the sample surface is located on the object-side focal plane of the adjustable lens group. A light guide surface with a special surface shape is arranged around the adjustable lens group, so that the light illumination in the observation area of the object is sufficient, uniform and soft, the light is reflected by the surface of the sample, and the unit microscopic imaging module 101 collects the reflected illumination image of the sample.

Optionally, the second illumination light source further includes a second dark field illuminator which is arranged above the adjustable lens group and corresponds to the adjustable lens group. The used second dark field illuminator includes a bright and dark field substrate 4017 and a dark field black background patch 4018. The size of the dark field black background patch 4018 matches with that of the adjustable lens group, and the dark field black background patch 4018 is arranged close to or away from the adjustable lens group relatively to the bright and dark field substrate 4017. Specifically, the used second dark field illuminator, that is, the reflective dark field illuminator, can be a white diffuse reflection plate with a black diffuse reflection circular surface. A plurality of black diffuse reflection circular surfaces is arranged corresponding to the array configuration of the unit microscopic imaging module 101, the center of the circle of each black diffuse reflection surface passes through the optical axis of each adjustable lens group, and the size of the circle is larger than the field range of view of the unit microscopic imaging module 101. The reflective plate is close to the back of the observation sample, and the above-mentioned reflective illumination light source is cooperatively used to illuminate the white diffuse reflection surface around the black circular area. A part of a large-angle diffuse reflection light 2011 again illuminates the observation sample without directly entering the adjustable lens group. The diffuse reflection generated on the surface of the observation sample enters the lens to produce a dark field illumination image of the sample.

Optionally, the image processing module includes an image signal processing unit, a data buffer unit, a motor control unit, and a data transmission interface. The image signal processing unit and the on-board circuit of the data acquisition card 102 directly form a circuit connection, the data acquisition card 102 and the motor control unit are respectively connected with the photosensitive module and the focusing motor 1013 through a flat cable 106. The microscopic imaging system further includes a main controller 105 and an image display unit 103. The main controller 105 is connected with the image processing unit via the data buffer unit, and the main controller 105 is connected with the image signal processing unit via a first bus 108, and is connected with the image display unit through a second bus. The image signal processing unit may also be integrated in the photosensitive module, and the photosensitive module is connected with the data acquisition card 102 through the flat cable 106 and then directly connected with the main controller 105 through an interface circuit of a flat cable 108.

Optionally, the main controller 105 and the image display unit 103 are integrated in the intelligent terminal. That is, the image data can be received through the intelligent terminal for processing and display.

Hereinafter, a specific embodiment of a microscopic imaging system of the present invention will be described in detail with reference to FIGS. 1 to 16.

### Embodiment 1

As shown in FIG. 1, in this embodiment, the microscopic imaging system includes six unit microscopic imaging modules 101. The six unit microscopic imaging modules 101 are arranged in an array structure with a minimum physical distance and is fixed on the data acquisition card 102 through the fixing mechanism 109. The six unit microscopic imaging modules 101 are respectively connected with the data acquisition card 102 through an interface of the on-board flat cable 106. A carrying platform (not shown in FIG. 1) for carrying the sample to be tested is arranged above the unit microscopic imaging modules 101, and the sample 107 to be tested can be arranged on the carrying platform. At the same time, an illumination light source 104 is provided above the carrying platform. Six independent image processing chips (not shown in FIG. 1) are provided on the data acquisition card 102 to independently control the photosensitive modules and focusing motors 1013 (not shown in FIG. 1) in the six unit microscopic imaging modules 101. The image processing chip acquires photosensitive data through the photosensitive module to perform corresponding processing. The data acquisition card 102 is provided with an interface bus 108. The data acquisition card 102 is connected with the main controller 105 through the interface bus 108. The main controller 105 acquires photosensitive data of the six unit microscopic imaging modules 101 through the interface bus 108 and performs corresponding processing, and images by the image display unit 103. The image processing chip on the data acquisition card 102 includes independent RAM and ISP chip. The main controller 105 is composed of an MTK6797 chip and a data storage ROM for analyzing and storing image data and driving the image display unit 103 to display results. The image display unit 103 uses a 5.5-inch OLED screen with a resolution of 1920^{∗}1080. In this embodiment, the illumination light source 104 may use an LCD backlight plate based on two LED light-emitting chips with a color temperature of 5000k and a power of 0.06W to provide transmission illumination to the sample 107.

FIGS. 2 to 4 are different embodiments of the unit microscopic imaging module 101 in FIG. 1.

As shown in FIG. 2, in this embodiment, the adjustable lens group includes a first lens group 1011 close to the photosensitive module and a second lens group 1012 away from the photosensitive module. The focal length of the first lens group 1011 is f1=2.2mm, and the focal length of the second lens group 1012 is f2=3mm. The distance TTL from the object plane to the image plane of the adjustable lens group on the optical axis is 8mm, and the distance TD from the surface of the object side (close to the tested object) to the surface of the image side (close to the photosensitive module) on the optical axis is 6mm. The first lens group 1011 is installed on a movable carrier of the focusing motor 1013 by dispensing glue or other fixing methods. The focusing motor 1013 may be a voice coil motor, an ultrasonic motor, a memory alloy motor, or the like. The stroke of the focusing motor 1013 is 300µm. The unit microscopic imaging module is provided with a lens fixing seat 1014, which is provided with internal threads inside, and the second lens group 1012 has external threads, and the two are connected by threads. In actual imaging, the focusing motor 1013 drives movement of the first lens group 1011, so as to achieve a focusing function, while the position of the second lens group 1012 in an imaging light path is fixed. The photosensitive module is arranged on the circuit board 1016, and the circuit board includes but is not limited to a printed circuit board, a flexible circuit board, and the like. The photosensitive module is fixedly placed at the image-side focal plane of the second lens group 1012, the light converged through the second lens group 1012 is incident on the photosensitive module, and the photosensitive module performs photoelectric conversion on the sensed light. The photosensitive chip 1015 used in the photosensitive module is an area-array photoelectric device, and the photosensitive chip 1015 can also be a CMOS image sensor or a CCD image sensor.

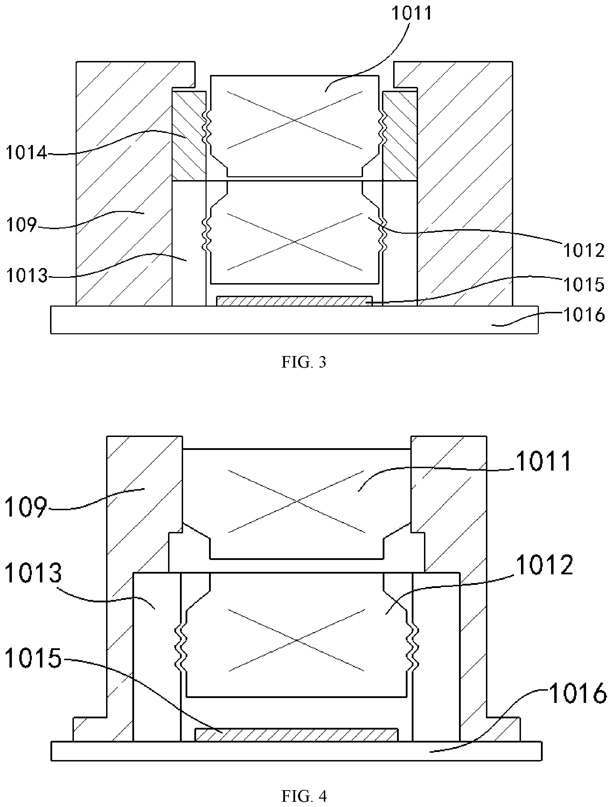

As shown in FIG. 3, in this embodiment, on the basis of the above-mentioned embodiment, the focusing motor 1013 is placed downward, and the second lens group 1012 is installed on a movable carrier of the focusing motor 1013 by dispensing glue or other fixing methods. The first lens group 1011 has external threads, and is in threaded connection with the lens holder 1014 provided with internal threads. In actual imaging, the focusing motor 1013 drives the second lens group 1012 to move, so as to achieve a focusing function, and the position of the first lens group 1011 in an imaging light path is fixed. As shown in FIG. 4, in this embodiment, on the basis of the above-mentioned embodiment, the first lens group 1011 is connected with a mechanical fixing mechanism 109 through its packaging, and the second lens group 1012 driven by the focusing motor 1013 is used as a separate module. Although there is a certain impact on the focusing range of the object side, different combinations of the first lens group 1011 and the second lens group 1012 can be adopted according to different actual application requirements, and are not limited to the existing miniature microscopic camera-shooting module packaged integrally.

### Embodiment 2

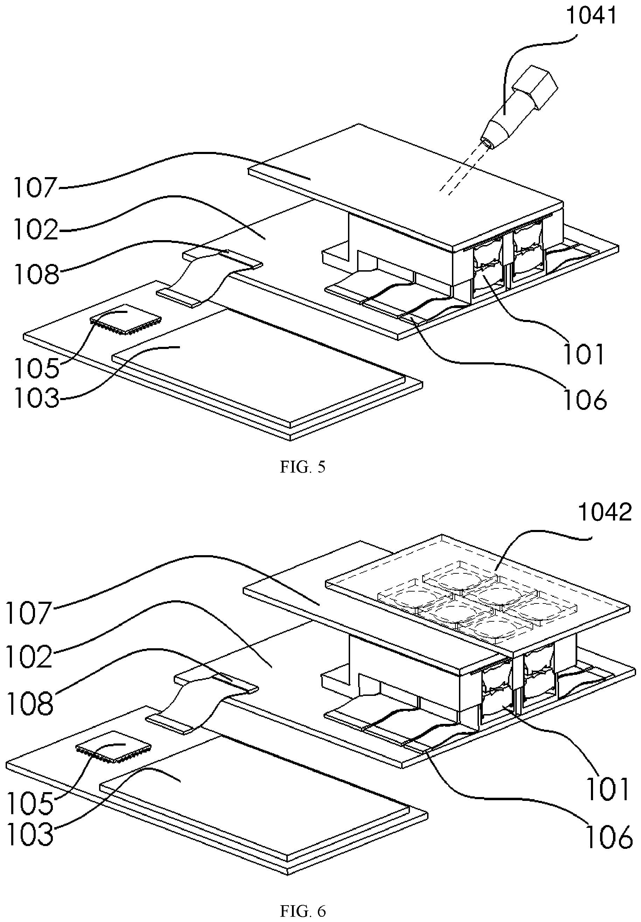

As shown in FIG. 5, on the basis of Embodiment 1, the illumination light source provided above the carrying platform is a fluorescence excitation light source, and the fluorescence excitation light source may adopt an oblique incident laser 1041. A 488nm-wavelength laser can be used. When a fluorescence excitation light source is used, the corresponding fluorescence excitation filter 302 is added to each unit microscopic imaging module 101.

### Embodiment 3

As shown in FIG. 6, on the basis of Embodiment 1, the illumination light source provided above the carrying platform is a fluorescence excitation light source, and the fluorescence excitation light source may adopt a LED light-emitting chip 1042. A 488nm-wavelength LED light-emitting chip can be used. When a fluorescence excitation light source is used, a corresponding fluorescence excitation filter 302 is added to each unit microscopic imaging module 101.

FIGS. 7 to 9 are different embodiments of the unit microscopic imaging module 101 in the embodiment shown in FIGS. 5 and 6.

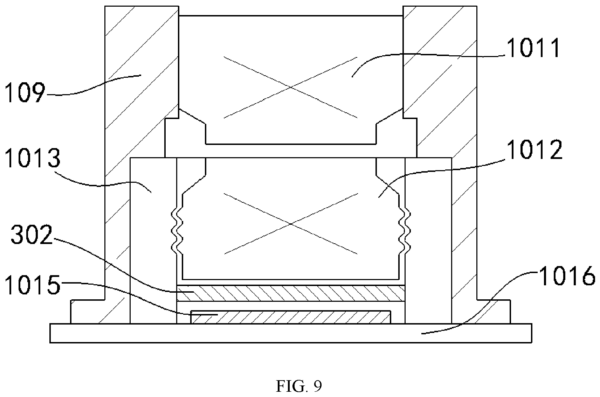

As shown in FIG. 7, in this embodiment, the fluorescence excitation filter 302 is located between the first lens group 1011 and the sample 107 in the unit microscopic imaging module 101. As shown in FIG. 8, in this embodiment, the fluorescence excitation filter 302 is located between the first lens group 1011 and the second lens group 1012 in the unit microscopic imaging module 101. As shown in FIG. 9, the fluorescence excitation filter 302 is located between the second lens group 1012 and the photosensitive module in the unit microscopic imaging module 101.

### Embodiment 4

As shown in FIG. 10, on the basis of Embodiment 1, the illumination light source provided above the carrying platform is a dark field illuminator. Thereinto, the dark field illuminator adopts LED light sources 4011 in an array arrangement and in a housing with a circular hole, the LED light sources 4011 are arranged in a uniform array around each unit module group and the number of LED lamp beads is ≥3, and most of the light in a small-angle area of luminous angle of the LED light sources 4011is covered by the housing 4012, the part of the light in a large-angle area illuminates the sample through the circular hole of the housing without directly entering the lens after exiting. The diffuse reflection light generated by an edge of the sample area with a height difference in some areas enters the lens module, and the background of the field of view in the module is a black matt surface of the back plate of the housing which is exposed behind the circular through-hole of a printed circuit board 40112 of the LED light sources, so as to acquire a dark field illumination image of the sample sheet.

### Embodiment 5

As shown in FIG. 11, on the basis of Embodiment 1, the illumination light source provided above the carrying platform is a dark field illuminator. The dark field illuminator uses a high-bright white light backlight 4013 with a hole. The bottom surface of the hole can be made of a material similar to black diffuse reflection surface. The stray light shielding baffle 4014 is added to a part of a light-emitting ring surface of a hole wall for shelter, so as to prevent the black background at the bottom of the hole from direct irradiation, and at the same time, control the light-emitting area and the angle at which the light illuminates the sample. After the sample is irradiated, the diffuse reflection light generated by an edge with a height difference in some areas enters the lens module to acquire a dark field illumination image. When the bottom surface of the hole of the backlight source 4013 with the hole of this dark field illuminator is a semi-transparent sheet 4015 with a black diffuse reflection surface, a complete backlight source 4016 can be added behind the semi-transparent sheet 4015 with a black diffuse reflection surface. By turning off the backlight source 4013 with a hole and turning on the complete backlight source 4016, the sample can be subject to transmission illumination, that is, the dark field illuminator also has the function of bright field illumination.

### Embodiment 6

As shown in FIG. 12, on the basis of embodiment 1, the illumination light source adopts the reflective illumination light source, and the reflective illumination light source adopts the white light LED lamp beads 201 as the light source. The overall PCB circuit board is fixed with the module array formed by each unit module, and the LED lamp beads are evenly distributed around each unit module on the PCB circuit board, so as to ensure that sample's illumination conditions in the field of view of each unit module are consistent. The light guide structure 202 is fixed above the reflective illumination light source, the body material has a high light transmittance, the surface of the light guide structure 202 is atomized, and a tapered surface is provided around the lens group, which improves the illumination effect, reduces stray light, so that the lighting becomes more uniform. The upper end surface of the light guide structure 202 is a sample positioning surface. Observing samples with low light transmittance by the reflection illumination can achieve good imaging results.

FIGS. 13 to 14 are different embodiments of the unit microscopic imaging module 101 in FIG. 12.

As shown in FIG. 13, in this embodiment, the unit microscopic imaging module 101 uses a focusing motor 1013 to drive the integral package module of the first lens group 1011, and the reflective illumination light source 201 is connected with the upper end surface of the mechanical fixing structure 109. The emitted light 2011 is emitted through a tapered hole surface of the light guide structure 202 and then irradiates the sample surface (the sample surface is limited by the upper end surface of the light guide structure 202), and the sample image is acquired by a camera module. It is also possible to use a unit microscopic imaging module in which the focusing motor 103 is placed downward for an embodiment of this reflective illumination.

As shown in FIG. 14, in this embodiment, the unit microscopic imaging module adopts a non-integral package module, and the mechanical fixing structure 109 in this embodiment is only used to fix a lower automatic focusing module and connect the reflective illumination light source 201, the first lens group 1011 is connected with the light guide structure 202 through the package therebetween.

### Embodiment 7

As shown in FIG. 15, on the basis of Embodiment 6, the dark field illuminator is a reflective plate with a circular black background in the middle area, and the size thereof is larger than that of the field of view of the unit microscopic imaging module, and is surrounded by a white diffuse reflective surface. In the case of dark field illumination, a surface on a side of the entire plate body with a black area is attached to the back of the sample slide, and the center of the circular black background, the center of the sample and the center of the lens are on the same axis. The light source is the LED lamp beads 201 of the reflective lighting unit module, and the emitted light 2011 thereof passes through a light guide structure 202, an air gap, and a sample glass slide, and then irradiates on a white diffuse reflection surface around the circular black background. A part of the diffuse reflection light enters the glass slide and then illuminates the sample. After the sample is irradiated, the diffuse reflection light generated by an edge with a height difference in some areas enters the lens module, while most of the remaining diffuse reflection light generated by the reflection plate in the glass slide cannot be emitted out of the glass slide due to the total reflection caused by the large exiting angle on the glass slide surface, and propagates to the edge in the glass slide without entering the lens, so that the system acquires a dark field illumination image.

### Embodiment 8

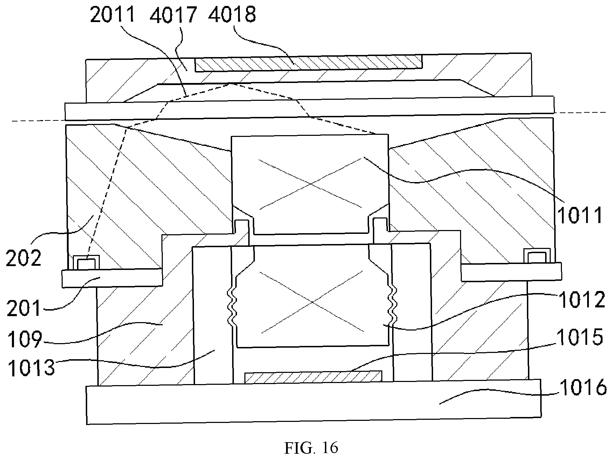

As shown in FIG. 16, on the basis of Embodiment 6, the bright field diffuse reflection is a recessed structure, and the white diffuse reflection surface is sunken at a distance of 0.5-5mm from a positioning surface, so that this dark field illuminator also has a function of bright field transmission illumination, which realizes the integration and miniaturization of the dark field illuminator and the bright field illuminator.

In summary, as compared with the prior art, the solution of the present invention has the following significant advantages:
1. the dark field illuminator for microscopic imaging of the present invention does not have a light source itself, but uses the light source of the unit microscopic imaging module, which reduces a volume. Moreover, the dark field illuminator can be used as dark field illumination alone, and has a bright field illumination structure and a bright field transmission lighting function, which can also be used as bright field illumination alone, and can also be used to switch between dark field illumination and bright field illumination. The switching between bright and dark fields is quick and convenient, which realizes integration and miniaturization of dark field illuminators and bright field illuminators.
2. an independent adjustable focusing design of the microscopic imaging system according to the present invention reduces the consistency requirement of unit module assembly and improves the production efficiency of the products.

It can be understood that the embodiments of the system described above are only illustrative, and the units described as separate components may or may not be physically separated, and may be located in one place or distributed to different network units. Some or all of the modules may be selected according to actual needs to achieve the objects of the solutions of the embodiments. Those skilled in the art can understand and implement the solutions without creative work.

In addition, those skilled in the art should understand that in the application documents of the embodiments of the present invention, the terms "including", "comprising" or any other variants thereof are intended to cover non-exclusive inclusions, so that a process, method, article, or equipment including a series of elements includes not only those elements, but also other elements that are not explicitly listed, or further includes elements inherent to the process, method, article, or equipment. If there are no more restrictions, the element defined by the sentence "including a..." does not exclude the existence of other identical elements in the process, method, article, or equipment including the element.

In the description of the embodiments of the present invention, a large number of specific details are described. However, it should be understood that the embodiments of the present invention may be practiced without these specific details. In some instances, well-known methods, structures, and technologies are not shown in detail, so as not to obscure the understanding of the description. Similarly, it should be understood that in order to simplify the disclosure of the embodiments of the present invention and facilitate understanding one or more of the various aspects of the present invention, in the above description of the exemplary embodiments of the embodiments of the present invention, various features of the embodiments of the present invention are sometimes grouped together into a single embodiment, figure, or description thereof.

However, the disclosed method should not be interpreted as reflecting the intention that the claimed embodiments of the present invention require more features than those explicitly stated in each claim. More precisely, as reflected in the claims, features in one aspect of the invention are less than all the features of a single embodiment disclosed previously. Therefore, the claims following the specific embodiments are thus explicitly incorporated into the specific embodiments, wherein each claim itself serves as a separate embodiment of the embodiments of the present invention.

Finally, it should be noted that the above embodiments are only used to illustrate the technical solutions of the embodiments of the present invention, not to limit them. Although the embodiments of the present invention are described in detail with reference to the above-mentioned embodiments, those skilled in the art should understand: it is still possible to modify the technical solutions recorded in the above-mentioned embodiments, or equivalently replace some of the technical features. And these modifications or replacements do not make the essence of the corresponding technical solutions deviate from the spirit and scope of the technical solutions of the embodiments of the present invention.

## Claims

1. A dark field illuminator for microscopic imaging, **characterized in that**, the dark field illuminator is arranged above an adjustable lens group of a unit microscopic imaging module (101) and corresponds to the adjustable lens group, a surface of the dark field illuminator is attached to a back of a sample slide, and the sample slide is located between the dark field illuminator and the adjustable lens group;
the dark field illuminator includes a bright and dark field substrate (4017) and a dark field black background patch (4018), the size of the dark field black background patch (4018) matches with that of the adjustable lens group, and the dark field black background patch (4018) is arranged close to or away from the adjustable lens group relatively to the bright and dark field substrate.

2. The dark field illuminator for microscopic imaging according to claim 1, further **characterized in that**
in the case of dark field illumination, a surface of the entire dark field black background patch (4018) is attached to a back of the sample slide.

3. The dark field illuminator for microscopic imaging according to claim 2, further **characterized in that**
the dark field illuminator is a reflective dark field illuminator, which is a white diffuse reflection plate with the dark field black background patch (4018).

4. The dark field illuminator for microscopic imaging according to claim 3, further **characterized in that**
the dark field black background patch (4018) is surrounded by the white diffuse reflection plate.

5. The dark field illuminator for microscopic imaging according to any one of claims 1-4, further **characterized in that**
the dark field black background patch (4018) is circular.

6. The dark field illuminator for microscopic imaging according to claim 5, further **characterized in that**
a size of the dark field black background patch (4018) is larger than that of a field of view of the unit microscopic imaging module (101).

7. The dark field illuminator for microscopic imaging according to claim 5, further **characterized in that**
a center of the dark field black background patch (4018), a center of the sample, and an optical axis of the unit microscopic imaging module (101) are located on a same axis.

8. The dark field illuminator for microscopic imaging according to claim 1, further **characterized in that**
the bright and dark field substrate (4017) of the dark field illuminator also has a recessed structure, and a white diffuse reflection surface is provided in the recessed structure, so that the dark field illuminator also has a bright field illumination function.

9. The dark field illuminator for microscopic imaging according to claim 8, further **characterized in that**
in a case of bright field illumination, a surface of the bright and dark field substrate (4017) on a side of the recessed structure is attached to a back of the sample slide, and an opening of the recessed structure faces the unit microscopic imaging module (101).

10. The dark field illuminator for microscopic imaging according to claim 8, further **characterized in that**
the dark field black background patch (4018) and the recessed structure are respectively arranged on the front and back surfaces of the bright and dark field substrate (4017).
